(19) Europäisches Patentamt
European Patent Office
Office européen des brevets

(11) **EP 4 421 932 B1**

(12) **EUROPEAN PATENT SPECIFICATION**

(45) Date of publication and mention
of the grant of the patent:
**10.06.2026 Bulletin 2026/24**

(21) Application number: **21961670.3**

(22) Date of filing: **25.10.2021**

(51) International Patent Classification (IPC):
$H01M\ 10/0525^{(2010.01)}$  $H01M\ 4/36^{(2006.01)}$
$H01M\ 4/525^{(2010.01)}$  $H01M\ 4/131^{(2010.01)}$
$C01G\ 51/42^{(2025.01)}$  $C01G\ 53/42^{(2025.01)}$
$H01M\ 4/136^{(2010.01)}$  $H01M\ 4/505^{(2010.01)}$
$H01M\ 4/1315^{(2010.01)}$  $H01M\ 4/58^{(2010.01)}$

(52) Cooperative Patent Classification (CPC):
H01M 4/5825; C01G 51/42; C01G 53/42;
H01M 4/131; H01M 4/1315; H01M 4/136;
H01M 4/364; H01M 4/505; H01M 4/525;
H01M 10/052; H01M 10/0525; H01M 10/0567;
C01P 2002/52; C01P 2002/54; C01P 2006/40;
(Cont.)

(86) International application number:
**PCT/CN2021/126213**

(87) International publication number:
**WO 2023/070287 (04.05.2023 Gazette 2023/18)**

(54) **POSITIVE ELECTRODE PLATE, ELECTROCHEMICAL DEVICE, AND ELECTRONIC DEVICE**

POSITIVELEKTRODENPLATTE, ELEKTROCHEMISCHE VORRICHTUNG UND ELEKTRONISCHE VORRICHTUNG

PLAQUE D'ÉLECTRODE POSITIVE, DISPOSITIF ÉLECTROCHIMIQUE ET DISPOSITIF ÉLECTRONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.08.2024 Bulletin 2024/35**

(73) Proprietor: **Ningde Amperex Technology Limited Ningde, Fujian 352100 (CN)**

(72) Inventor: **ZHOU, Molin**
**Ningde, Fujian 352100 (CN)**

(74) Representative: **Icosa**
**83 avenue Denfert-Rochereau**
**75014 Paris (FR)**

(56) References cited:
CN-A- 102 569 878    CN-A- 108 321 381
CN-A- 110 265 627    CN-A- 113 140 722

**(Cont. next page)**

(52) Cooperative Patent Classification (CPC): (Cont.)
H01M 2004/021; H01M 2004/028; Y02E 60/10

Description

TECHNICAL FIELD

This application relates to the field of electrochemical technology, and in particular, to a positive electrode plate, an electrochemical device, and an electronic device.

BACKGROUND

During a first charge-discharge cycle of a lithium-ion secondary battery, a solid electrolyte interface (SEI) film is formed on the surface of a negative active material of the battery, thereby causing an irreversible loss of active lithium, and in turn, reducing the energy density of the lithium-ion secondary battery. For example, in a case of using graphite as a negative active material, approximately 10% of the active lithium is consumed in the first charge-discharge cycle of the battery. In a case that the negative active material is a higher-specific-capacity material such as an alloy (of silicon, tin, or the like), an oxide (silicon oxide, tin oxide, or the like), or amorphous carbon, the irreversible loss of active lithium is further increased. Therefore, compensating for the irreversible loss of the active lithium in the first charge-discharge cycle by an appropriate method is of great significance to increasing the energy density of the lithium-ion secondary battery.

Document CN 102 569 878 A discloses a positive electrode active material, the positive electrode active material comprising a first lithium complex oxide and a second lithium complex oxide as represented by formula (1) $Li_{1+a}(Ni_3M1_cM2_{1-b-c})_{1.5-0.5a}O_2$ (1), wherein M1 represents at least one selected from Group 13 elements to Group 15 elements in the periodic table of the elements, other than boron (B) or carbon (C) or nitrogen (N); M2 represents at least one selected from Group 3 elements to Group 12 elements; and a, b and c satisfy the following relations: $0.95 \le a \le 1.05$, $0 < b \le 0.99$, and $0 < c \le 0.15$.

SUMMARY

An objective of this application is to provide a positive electrode plate, an electrochemical device, and an electronic device to improve the processing performance of the positive electrode plate, compensate for irreversible loss of active lithium in a first charge-discharge cycle, and endow the electrochemical device with a high energy density, a long cycle life, and good C-rate performance concurrently.

A first aspect of this application provides a positive electrode plate. The positive electrode plate includes a positive electrode film layer. The positive electrode film layer includes a first positive active material represented by Chemical Formula 1 and a second positive active material represented by Chemical Formula 2:

$$Li_{1+x}Co_yM1_{1-y}O_{2-z}A_z \qquad \text{Chemical Formula 1}$$

$$Li_{2+r}Ni_pCu_qTi_uM2_vO_{2-s}B_s \qquad \text{Chemical Formula 2}$$

In the formulas above, $-0.1 \le x \le 0.2$, $0.8 \le y \le 1$, $0 \le z \le 0.2$, M1 includes at least one of Ni, Mn, Al, Mg, Ti, Zr, La, Y, Fe, Cr, V, Zn, Ru, Rh, Ga, Pd, Pt, Mo, W, Sb, Nb, Se, Te, or Ce; and A includes at least one of S, N, P, F, Cl, or Br. $-0.2 \le r \le 0.2$, $0 < p < 1$, $0 < q < 1$, $0 < u \le 0.01$, $0 \le v \le 0.2$, $0 < p + q + u + v \le 1$, $0 \le s < 0.2$; M2 includes at least one of Mn, Fe, Co, Al, V, Cr, Nb, Mg, Zr, La, Y, Zn, Ru, Rh, Ga, Pd, Pt, Mo, W, Sb, Nb, Se, Te, or Ce; and B includes at least one of S, N, P, F, Cl, or Br.

The first positive active material is of a relatively high specific capacity, and little changes in volume during charging and discharging, and therefore, and endows the electrochemical device with relatively high cycle stability and relatively high first-cycle Coulombic efficiency. The positive electrode plate of this application can give full play to the synergistic effect between the first positive active material and the second positive active material. During the first-cycle charging of the electrochemical device, because the second positive active material is characterized by a high specific capacity of the first-cycle charging and a low first-cycle Coulombic efficiency, the second positive active material can effectively compensate for the irreversible loss of active lithium caused by the formation of the SEI film on the surface of the negative active material. In addition, during the first-cycle discharging of the electrochemical device, sufficient active lithium is intercalated back into the first positive active material, thereby effectively improving the energy density and cycle performance of the electrochemical device.

The second positive active material implements doping with Cu, Ti, and optional M2 cations while supplementing lithium with the $Li_2NiO_2$ lithium-supplementing material, so as to form a Li-Ni-Cu-Ti-O (or Li-Ni-Cu-Ti-M2-O) solid solution. Compared with the $Li_2NiO_2$, the Li-Ni-Cu-Ti-O (or Li-Ni-Cu-Ti-M2-O) solid solution is characterized by a lower phase transformation energy barrier, a higher purity, a higher specific capacity, and a lower first-cycle Coulombic efficiency, thereby more effectively compensating for the irreversible loss of active lithium caused by the formation of the SEI film on the surface of the negative active material, and further improving the energy density and cycle performance of the electrochemical device. In addition, the second positive active material contains a small amount of Ti element. The Ti element is of a higher affinity for free lithium (such as LiOH and $Li_2CO_3$). Therefore, the content of free lithium on the surface of the second positive active material is lower, thereby significantly alleviating the problem of gelation of the positive electrode slurry and improving the processing performance of the positive electrode plate.

In any embodiment of this application, $-0.05 \leq x \leq 0.1$.

In any embodiment of this application, $0.8 \leq y < 1$.

In any embodiment of this application, $0 < z \leq 0.2$.

In any embodiment of this application, M1 includes at least one of Ni, Mn, Al, Mg, Ti, Zr, La, Y, Fe, Cr, V, Zn, or Rh.

In any embodiment of this application, A includes at least one of S or F.

In any embodiment of this application, $-0.1 \leq r \leq 0.1$.

In any embodiment of this application, $0.39 \leq p < 0.5$.

In any embodiment of this application, $0.39 \leq q < 0.5$.

In any embodiment of this application, $0 < u \leq 0.005$.

In any embodiment of this application, $0 < v \leq 0.2$.

In any embodiment of this application, $0 < s \leq 0.2$.

In any embodiment of this application, M2 includes at least one of Mn, Fe, Co, Al, V, Cr, Nb, Mg, Zr, or Zn.

In any embodiment of this application, B includes at least one of S or F.

In any embodiment of this application, a mass ratio between the first positive active material and the second positive active material is 5: 1 to 99: 1. Optionally, the mass ratio between the first positive active material and the second positive active material is 9: 1 to 99: 1. The positive electrode plate of this application contains a relatively high content of the first positive active material of higher structural stability, and can reduce the active lithium loss and impedance increase caused by structural disruption, thereby endowing the electrochemical device with a higher level of cycle stability and kinetic performance.

In any embodiment of this application, based on a total mass of the positive electrode film layer, the mass percent of the first positive active material is 80% to 98%. Optionally, the mass percent of the first positive active material is 85% to 98%.

In any embodiment of this application, the positive electrode plate satisfies: $2 \leq R \times P/Q \leq 36$; $R \Omega$ is a single-side resistance of the positive electrode plate; $P$ g/cm$^3$ is a compaction density of the positive electrode plate; and Q g/1540.25 mm$^2$ is a single-side areal density of the positive electrode plate. Optionally, the positive electrode plate satisfies: $5 \leq R \times P/Q \leq 32$.

By reasonably designing the single-side resistance, compaction density, and single-side areal density of the positive electrode plate, this application can further improve the energy density, C-rate performance, and cycle performance of the electrochemical device. Therefore, the electrochemical device that employs the positive electrode plate of this application exhibits a high energy density, a long cycle life, and good C-rate performance concurrently.

In any embodiment of this application, a single-side resistance of the positive electrode plate is $R \Omega$, satisfying: $R \leq 3$. Optionally, $R \leq 1.5$. When the single-side resistance of the positive electrode plate falls within an appropriate range, the cycle performance and C-rate performance of the electrochemical device are further improved.

In any embodiment of this application, a compaction density of the positive electrode plate is $P$ g/cm$^3$, satisfying: $4.0 \leq P \leq 4.3$. When the compaction density of the positive electrode plate falls within an appropriate range, the migration of electrons and lithium ions is facilitated, thereby further improving the cycle performance of the electrochemical device and also endowing the electrochemical device with a high energy density.

In any embodiment of this application, a single-side areal density of the positive electrode plate is Q g/1540.25 mm$^2$, satisfying: $0.16 \leq Q \leq 0.38$. When the single-side areal density of the positive electrode plate falls within an appropriate range, the cycle performance and C-rate performance of the electrochemical device can be further improved at the same time as ensuring a high level of charge capacity and discharge capacity.

In any embodiment of this application, the second positive active material belongs to an *Immm* space group.

In any embodiment of this application, in an X-ray diffraction pattern of the second positive active material determined after first-cycle charging, characteristic diffraction peaks are exhibited at positions corresponding to a diffraction angle 2θ of 36° to 38°, 42° to 44°, and 62° to 64°, respectively.

A second aspect of this application provides an electrochemical device. The electrochemical device includes the positive electrode plate according to the first aspect of this application.

In any embodiment of this application, the electrochemical device includes an electrolyte solution. The electrolyte solution includes a negative electrode film-forming additive. Based on a total mass of the electrolyte solution, a mass percent of the additive is 0% to 15%. Optionally, the mass percent of the additive is 0.5% to 15%.

In any embodiment of this application, the additive includes at least one of fluoroethylene carbonate, vinylene carbonate, vinyl ethylene carbonate, ethylene sulfate, propylene sulfate, ethylene sulfite, 1,3-propane sultone, 1,3-propene sultone, sulfonate cyclic quaternary ammonium salt, succinic anhydride, succinonitrile, adiponitrile, tris(trimethylsilane)phosphate, or tris(trimethylsilane)borate.

In any embodiment of this application, the additive includes at least fluoroethylene carbonate.

When the electrolyte solution of this application includes fluoroethylene carbonate, it is convenient to form an evener, denser, and thinner SEI film after the first charge-discharge cycle of the electrochemical device, and prevent continuous reduction reactions of the organic solvent at the negative electrode. In this way, an evener and denser SEI film is formed on the surface of the negative active material at the same time as compensating for the irreversible loss of active lithium caused by the formation of the SEI film, thereby reducing the continuous loss of active lithium. Therefore, the electrochemical device of this application exhibits a high energy density, a long cycle life, and good C-rate performance concurrently.

A third aspect of this application provides an electronic device. The electronic device includes the electrochemical device according to the second aspect of this application.

## BRIEF DESCRIPTION OF DRAWINGS

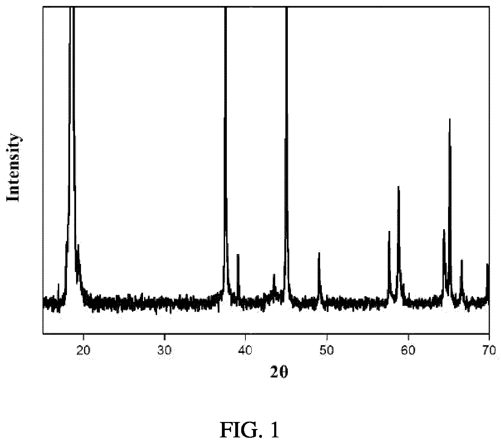

FIG. 1 is an X-ray diffraction pattern of a second positive active material tested after first-cycle charging according to Embodiment 1.

## DETAILED DESCRIPTION OF EMBODIMENTS

To make the objectives, technical solutions, and advantages of this application clearer, the following gives a clear and comprehensive description of the technical solutions of this application with reference to embodiments. Evidently, the described embodiments are merely a part of but not all of the embodiments of this application. The embodiments described herein are illustrative in nature, and are intended to enable a basic understanding of this application. No embodiment of this application is to be construed as a limitation on this application. All other embodiments derived by a person skilled in the art based on the technical solutions and embodiments provided herein without making any creative efforts still fall within the protection scope of this application. For brevity, some specific numerical ranges are disclosed herein for illustrative purpose only. However, any lower limit may be combined with any upper limit to form an unspecified range, any lower limit may be combined with any other lower limit to form an unspecified range, and any upper limit may be combined with any other upper limit to form an unspecified range. In addition, each separately disclosed point or single numerical value may be used as a lower limit or upper limit to combine with any other point or other single numerical value or with any other lower or upper limit to form an unspecified range.

In the description of this application, unless otherwise specified, a numerical value qualified by "at least" or "at most" includes this numerical value.

Unless otherwise specified, the terms used in this application have the well-known meanings commonly understood by a person skilled in the art. Unless otherwise specified, the value of a parameter mentioned in this application may be measured by various measurement methods commonly used in the art (for example, may be tested according to the method described in an embodiment of this application).

The term "approximately" is intended to describe and represent small variations. When used together with an event or situation, the term "approximately" may represent an example in which the event or situation occurs exactly or an example in which the event or situation occurs very approximately. For example, when used together with a numerical value, the term "approximately" may represent a variation range falling within $\pm10\%$ of the numerical value, such as $\pm5\%$, $\pm4\%$, $\pm3\%$, $\pm2\%$, $\pm1\%$, $\pm0.5\%$, $\pm0.1\%$, or $\pm0.05\%$ of the numerical value. In addition, a quantity, a ratio, or another numerical value herein is sometimes expressed in the format of a range. Understandably, such a range format is set out for convenience and brevity, and needs to be flexibly understood to include not only the numerical values explicitly specified and defined by the range, but also all individual numerical values or sub-ranges covered in the range as if each individual numerical value and each sub-range were explicitly specified.

A list of items referred to by the terms such as "at least one of", "at least one thereof", "at least one type of" may mean any combination of the listed items. For example, if items A and B are listed, the phrases "at least one of A and B" and "at least one of A or B" mean: A alone; B alone; or both A and B. In another example, if items A, B, and C are listed, the phrases "at least one of A, B, and C" and "at least one of A, B, or C" mean: A alone; B alone; C alone; A and B (excluding C); A and C (excluding B); B and C (excluding A); or all of A, B, and C. The item A may include a single component or a plurality of components. The item B may include a single component or a plurality of components. The item C may include a single component or a plurality of components. To increase the energy density of the lithium-ion secondary battery, a lithium-supplementing technology may be applied to increase the content of active lithium and compensate for the irreversible loss of active lithium during the first charge-discharge cycle of the lithium-ion secondary battery. A mainstream and relatively mature lithium-supplementing technology currently available is a negative electrode lithium-supplementing technology, for example, implemented by overlaying a surface of a negative electrode plate with a lithium metal layer in the form of lithium powder or a lithium foil. However, due to chemical properties, metallic lithium is very active and prone to react with moisture in the air. This imposes relatively high requirements on both the environment (air humidity, oxygen content, and the like) and equipment during the lithium supplementation, and increases difficulty of implementation. In addition, the lithium powder is prone to float in the air, posing relatively high safety hazards during lithium supplementation.

Compared with the negative electrode lithium-supplementing technique, a positive electrode lithium-supplementing technique is safer and less demanding for the environment and equipment. The positive electrode lithium-supplementing technique may be: adding a lithium-supplementing material into a positive electrode slurry to prepare a lithium-rich positive electrode plate, and therefore, during the first charge-discharge cycle (for example, during chemical formation or an initial cycle) of the lithium-ion secondary battery, the lithium-supplementing material releases active lithium to compensate for the irreversible loss of the active lithium caused by the formation of the SEI film. The prior art has disclosed a method that uses $Li_2NiO_2$ as a lithium-supplementing material to compensate for the irreversible loss of active lithium caused by the formation of the SEI film. Characterized by a high specific capacity and simplicity of preparation, the $Li_2NiO_2$ can well improve the energy density of the lithium-ion secondary battery. However, the content of free lithium (for example, $LiOH$, $Li_2CO_3$) on the surface of the $Li_2NiO_2$ is high, and is very prone to cause gelation during the preparation of a positive electrode slurry, thereby severely impairing the processing performance of the positive electrode plate.

To solve the above problems, through extensive research, the applicant hereof hereby discloses a positive electrode plate capable of effectively improving the energy density and exhibiting good processing performance.

**Positive electrode plate**

A first aspect of this application provides a positive electrode plate. The positive electrode plate includes a positive current collector and a positive electrode film layer disposed on at least one surface of the positive current collector. The positive electrode film layer includes a first positive active material represented by Chemical Formula 1 and a second positive active material represented by Chemical Formula 2:

$$Li_{1+x}Co_yM1_{1-y}O_{2-z}A_z \qquad \text{Chemical Formula 1}$$

$$Li_{2+r}Ni_pCu_qTi_uM2_vO_{2-s}B_s \qquad \text{Chemical Formula 2}$$

In the formulas above, $-0.1 \le x \le 0.2$, $0.8 \le y \le 1$, $0 \le z \le 0.2$, M1 includes at least one of Ni, Mn, Al, Mg, Ti, Zr, La, Y, Fe, Cr, V, Zn, Ru, Rh, Ga, Pd, Pt, Mo, W, Sb, Nb, Se, Te, or Ce; and A includes at least one of S, N, P, F, Cl, or Br. $-0.2 \le r \le 0.2$, $0 < p < 1$, $0 < q < 1$, $0 < u \le 0.01$, $0 \le v \le 0.2$, $0 < p+q+u+v \le 1$, $0 \le s < 0.2$; M2 includes at least one of Mn, Fe, Co, Al, V, Cr, Nb, Mg, Zr, La, Y, Zn, Ru, Rh, Ga, Pd, Pt, Mo, W, Sb, Nb, Se, Te, or Ce; and B includes at least one of S, N, P, F, Cl, or Br.

The first positive active material is of a relatively high specific capacity, and little changes in volume during charging and discharging, and therefore, and endows the electrochemical device with relatively high cycle stability and relatively high first-cycle Coulombic efficiency. The positive electrode plate of this application can give full play to the synergistic effect between the first positive active material and the second positive active material. During the first-cycle charging of the electrochemical device, because the second positive active material is characterized by a high specific capacity of the first-cycle charging and a low first-cycle Coulombic efficiency, the second positive active material can effectively compensate for the irreversible loss of active lithium caused by the formation of the SEI film on the surface of the negative active material. In addition, during the first-cycle discharging of the electrochemical device, sufficient active lithium is intercalated back into the first positive active material, thereby effectively improving the energy density and cycle performance of the electrochemical device.

The second positive active material implements doping with Cu, Ti, and optional M2 cations while supplementing lithium with the $Li_2NiO_2$ lithium-supplementing material, so as to form a Li-Ni-Cu-Ti-O (or Li-Ni-Cu-Ti-M2-O) solid solution. Compared with the $Li_2NiO_2$, the Li-Ni-Cu-Ti-O (or Li-Ni-Cu-Ti-M2-O) solid solution is characterized by a lower phase transformation energy barrier, a higher purity, a higher specific capacity, and a lower first-cycle Coulombic efficiency, thereby more effectively compensating for the irreversible loss of active lithium caused by the formation of the SEI film on the surface of the negative active material, and further improving the energy density and cycle performance of the electrochemical device. In addition, the second positive active material contains a small amount of Ti element. The Ti element is of a higher affinity for free lithium (such as $LiOH$ and $Li_2CO_3$). Therefore, the content of free lithium on the surface of the second positive active material is lower, thereby significantly alleviating the problem of gelation of the positive electrode slurry and improving the processing performance of the positive electrode plate.

In the positive electrode plate of this application, the first positive active material and the second positive active material further optionally include doped anions. After the anion and the cation are doped and modified simultaneously, the structures of the first positive active material and the second positive active material are more stable, so that the electrochemical device maintains superior overall performance.

In some embodiments, $-0.05 \le x \le 0.1$.

In some embodiments, y = 1.

In some embodiments, $0.8 \leq y < 1$. Optionally, $0.9 \leq y < 1$.

In some embodiments, z = 0.

In some embodiments, $0 < z \leq 0.2$. Optionally, $0 < z \leq 0.1$. Further, $0 < z \leq 0.05$.

In some embodiments, M1 includes at least one of Ni, Mn, Al, Mg, Ti, Zr, La, Y, Fe, Cr, V, Zn, or Rh.

In some embodiments, M1 is at least one selected from Ni, Mn, Al, Mg, Ti, Zr, La, Y, Fe, Cr, V, Zn, or Rh.

In some embodiments, A includes at least one of S or F. Optionally, A includes F.

In some embodiments, A is selected from S, F, or a combination thereof. Optionally, A is selected from F.

In some embodiments, $-0.05 \leq x \leq 0.1$, $0.9 \leq y < 1$, $z = 0$; and M1 includes at least one of Ni, Mn, Al, Mg, Ti, Zr, La, Y, Fe, Cr, V, Zn, or Rh.

In some embodiments, $-0.05 \leq x \leq 0.1$, $0.9 \leq y < 1$, $z = 0$; and M1 is at least one selected from Ni, Mn, Al, Mg, Ti, Zr, La, Y, Fe, Cr, V, Zn, or Rh.

In some embodiments, $-0.05 \leq x \leq 0.1$, $0.9 \leq y < 1$, $0 < z \leq 0.1$; M1 includes at least one of Ni, Mn, Al, Mg, Ti, Zr, La, Y, Fe, Cr, V, Zn, or Rh; and A includes at least one of S or F.

In some embodiments, $-0.05 \leq x \leq 0.1$, $0.9 \leq y < 1$, $0 < z \leq 0.1$; and M1 is at least one selected from Ni, Mn, Al, Mg, Ti, Zr, La, Y, Fe, Cr, V, Zn, or Rh; and A is selected from S, F, or a combination thereof.

In some embodiments, x = 1, y = 1, and z = 0.

In some embodiments, x = 1, y = 1, $0 < z \leq 0.1$, and A includes at least one of S or F.

In some embodiments, x = 1, y = 1, $0 < z \leq 0.1$, and A is selected from S, F, or a combination thereof.

In some embodiments, $-0.1 \leq r \leq 0.1$.

In some embodiments, $0.39 \leq p < 0.5$. Optionally, $0.44 \leq p < 0.5$. Further, $0.49 \leq p < 0.5$.

In some embodiments, $0.39 \leq q < 0.5$. Optionally, $0.44 \leq q < 0.5$. Further, $0.49 \leq q < 0.5$.

In some embodiments, $0 < u \leq 0.005$.

In some embodiments, v = 0.

In some embodiments, $0 < v \leq 0.2$. Optionally, $0 < v \leq 0.1$.

In some embodiments, $0 < p + q + u + v < 1$.

In some embodiments, s = 0.

In some embodiments, $0 < s \leq 0.2$. Optionally, $0 < s \leq 0.1$.

In some embodiments, M2 includes at least one of Mn, Fe, Co, Al, V, Cr, Nb, Mg, Zr, or Zn.

In some embodiments, M2 is at least one selected from Mn, Fe, Co, Al, V, Cr, Nb, Mg, Zr, or Zn.

In some embodiments, B includes at least one of S or F. Optionally, B includes F.

In some embodiments, B is selected from S, F, or a combination thereof. Optionally, B is selected from F.

In some embodiments, $-0.1 \leq r \leq 0.1$, $0.49 \leq p < 0.5$, $0.49 \leq q < 0.5$, $0 < u \leq 0.01$, $v = 0$, $0 < s \leq 0.1$, and B includes at least one of S or F.

In some embodiments, $-0.1 \leq r \leq 0.1$, $0.49 \leq p < 0.5$, $0.49 \leq q < 0.5$, $0 < u \leq 0.01$, $v = 0$, $0 < s \leq 0.1$, and B is selected from S, F, or a combination thereof.

In some embodiments, $-0.1 \leq r \leq 0.1$, $0.49 \leq p < 0.5$, $0.49 \leq q < 0.5$, $0 < u \leq 0.01$, $v = 0$, and s = 0.

In some embodiments, $-0.1 \leq r \leq 0.1$, $0.44 \leq p < 0.5$, $0.44 \leq q < 0.5$, $0 < u \leq 0.01$, $0 < v \leq 0.1$, s = 0; and M2 includes at least one of Mn, Fe, Co, Al, V, Cr, Nb, Mg, Zr, or Zn. In some embodiments, $-0.1 \leq r \leq 0.1$, $0.44 \leq p < 0.5$, $0.44 \leq q < 0.5$, $0 < u \leq 0.01$, $0 < v \leq 0.1$, s = 0; and M2 is at least one selected from Mn, Fe, Co, Al, V, Cr, Nb, Mg, Zr, or Zn.

In some embodiments, $-0.1 \leq r \leq 0.1$, $0.44 \leq p < 0.5$, $0.44 \leq q < 0.5$, $0 < u \leq 0.01$, $0 < v \leq 0.1$, $0 < s \leq 0.1$; M2 includes at least one of Mn, Fe, Co, Al, V, Cr, Nb, Mg, Zr, or Zn; and B includes at least one of S or F.

In some embodiments, $-0.1 \leq r \leq 0.1$, $0.44 \leq p < 0.5$, $0.44 \leq q < 0.5$, $0 < u \leq 0.01$, $0 < v \leq 0.1$, $0 < s \leq 0.1$; M2 is at least one selected from Mn, Fe, Co, Al, V, Cr, Nb, Mg, Zr, or Zn; and B is selected from S, F, or a combination thereof.

With a crystal structure similar to that of $Li_2NiO_2$, the second positive active material of this application outperforms $Li_2NiO_2$. In some embodiments, the second positive active material belongs to an *Immm* space group.

In some embodiments, in an X-ray diffraction pattern of the second positive active material determined after first-cycle charging, characteristic diffraction peaks are exhibited at positions corresponding to a diffraction angle 2θ of 36° to 38°, 42° to 44°, and 62° to 64°, respectively.

In some embodiments, a mass ratio between the first positive active material and the second positive active material is 5: 1 to 99: 1. For example, the mass ratio between the first positive active material and the second positive active material is 5: 1, 10: 1, 15: 1, 20: 1, 25: 1, 30: 1, 35: 1, 40: 1, 45: 1, 50: 1, 55: 1, 60: 1, 65: 1, 70: 1, 75: 1, 80: 1, 85: 1, 90: 1, 95: 1, 99: 1, or a value falling within a range formed by any two thereof. Optionally, the mass ratio between the first positive active material and the second positive active material is 9: 1 to 99: 1.

The positive electrode plate of this application contains a relatively high content of the first positive active material of higher structural stability, and can reduce the active lithium loss and impedance increase caused by structural disruption, thereby endowing the electrochemical device with a higher level of cycle stability and kinetic performance. In some embodiments, based on a total mass of the positive electrode film layer, the mass percent of the first positive active material is 80% to 98%. For example, the mass percent of the first positive active material is 80%, 81%, 82%, 83%, 84%, 85%, 86%, 87%, 88%, 89%, 90%, 91%, 92%, 93%, 94%, 95%, 96%, 97%, 98%, or a value falling within a range formed by any two thereof. Optionally, the mass percent of the first positive active material is 85% to 98%.

In some embodiments, the mass percent of the second positive active material may be adjusted depending on the type of the negative active material in use. For example, in a case of using graphite as a negative active material, the mass percent of the second positive active material may be kept within a relatively low range. In a case that the negative active material is made of an alloy (of silicon, tin, or the like), an oxide (silicon oxide, tin oxide, or the like), or amorphous carbon, the mass percent of the second positive active material may be kept within a relatively high range, so as to more effectively compensate for the irreversible loss of active lithium caused by the formation of the SEI film on the surface of the negative active material.

Through further research, the applicant hereof finds that the single-side resistance, compaction density, and single-side areal density of the positive electrode plate are key parameters in the design and preparation process of the electrochemical device. If the single-side resistance of the positive electrode plate is overly high, the cycle performance and C-rate performance of the electrochemical device deteriorate; if the compaction density of the positive electrode plate is overly high or overly low, both the cycle performance and C-rate performance of the electrochemical device deteriorate; if the single-side areal density of the positive electrode plate is overly high, the infiltration effect of the electrolyte solution deteriorates, and the cycle performance and C-rate performance of the electrochemical device deteriorate, and especially the discharge capacity of the electrochemical device is significantly reduced when the electrochemical device is discharged at a high C-rate; and, if the single-side areal density of the positive electrode plate is overly low, the lengths of the positive current collector and the separator are increased when the capacity remains the same, the ohmic internal resistance of the electrochemical device increases, and both the cycle performance and C-rate performance also deteriorate. Therefore, it is necessary to rationally design the above parameters of the electrochemical device to ensure that the electrochemical performance of the positive electrode plate and the electrochemical device reaches the expected level.

In some embodiments, the positive electrode plate satisfies: $2 \leq R \times P/Q \leq 36$; R $\Omega$ is a single-side resistance of the positive electrode plate; P $g/cm^3$ is a compaction density of the positive electrode plate; and Q $g/1540.25 \ mm^2$ is a single-side areal density of the positive electrode plate. For example, $R \times P/Q$ is 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, or a value falling within a range formed by any two thereof.

Optionally, the positive electrode plate satisfies: $3 \leq R \times P/Q \leq 36$, $4 \leq R \times P/Q \leq 36$, $5 \leq R \times P/Q \leq 36$, $6 \leq R \times P/Q \leq 36$, $7 \leq R \times P/Q \leq 36$, $8 \leq R \times P/Q \leq 36$, $2 \leq R \times P/Q \leq 32$, $3 \leq R \times P/Q \leq 32$, $4 \leq R \times P/Q \leq 32$, $5 \leq R \times P/Q \leq 32$, $6 \leq R \times P/Q \leq 32$, $7 \leq R \times P/Q \leq 32$, $8 \leq R \times P/Q \leq 32$, $2 \leq R \times P/Q \leq 28$, $3 \leq R \times P/Q \leq 28$, $4 \leq R \times P/Q \leq 28$, $5 \leq R \times P/Q \leq 28$, $6 \leq R \times P/Q \leq 28$, $7 \leq R \times P/Q \leq 28$, $8 \leq R \times P/Q \leq 28$, $2 \leq R \times P/Q \leq 24$, $3 \leq R \times P/Q \leq 24$, $4 \leq R \times P/Q \leq 24$, $5 \leq R \times P/Q \leq 24$, $6 \leq R \times P/Q \leq 24$, $7 \leq R \times P/Q \leq 24$, $8 \leq R \times P/Q \leq 24$, $2 \leq R \times P/Q \leq 20$, $3 \leq R \times P/Q \leq 20$, $4 \leq R \times P/Q \leq 20$, $5 \leq R \times P/Q \leq 20$, $6 \leq R \times P/Q \leq 20$, $7 \leq R \times P/Q \leq 20$, or $8 \leq R \times P/Q \leq 20$.

By reasonably designing the single-side resistance, compaction density, and single-side areal density of the positive electrode plate, this application can further improve the energy density, C-rate performance, and cycle performance of the electrochemical device. Therefore, the electrochemical device that employs the positive electrode plate of this application exhibits a high energy density, a long cycle life, and good C-rate performance concurrently.

It is hereby noted that the calculation of $R \times P/Q$ is merely calculation of numerical values. For example, if the single-side resistance of the positive electrode plate, denoted as R $\Omega$, is 1.0 $\Omega$, the compaction density, denoted as P $g/cm^3$, is 4.2 $g/cm^3$, and the single-side areal density, denoted as Q $g/1540.25 \ mm^2$, is 0.26 $g/1540.25 \ mm^2$, then $R \times P/Q = 1.0 \times 4.2/0.26 = 16.15$.

In some embodiments, the single-side resistance of the positive electrode plate is R $\Omega$, satisfying: $R \leq 3$. For example, $R \leq 2.5$, $R \leq 2.0$, $R \leq 1.5$, or $R \leq 1.0$. When the single-side resistance of the positive electrode plate falls within an appropriate range, the cycle performance and C-rate performance of the electrochemical device are further improved.

In some embodiments, the compaction density of the positive electrode plate is P $g/cm^3$, satisfying: $4.0 \leq P \leq 4.3$. When the compaction density of the positive electrode plate falls within an appropriate range, the migration of electrons and lithium ions is facilitated, thereby further improving the cycle performance of the electrochemical device and also endowing the electrochemical device with a high energy density.

In some embodiments, the single-side areal density of the positive electrode plate is Q $g/1540.25 \ mm^2$, satisfying: $0.16 \leq Q \leq 0.38$. For example, Q is 0.16, 0.18, 0.20, 0.22, 0.24, 0.26, 0.28, 0.30, 0.32, 0.34, 0.36, 0.38, or a value falling within a range formed by any two thereof. Optionally, $0.16 < Q < 0.38$. When the single-side areal density of the positive electrode plate falls within an appropriate range, the cycle performance and C-rate performance of the electrochemical device can be further improved at the same time as ensuring a high level of charge capacity and discharge capacity.

In some embodiments, the positive electrode film layer further optionally includes a conductive agent and a binder. Specific types of the conductive agent and the binder are not particularly limited, and may be selected as required.

**EP 4 421 932 B1**

As an example, the conductive agent includes, but is not limited to, at least one of conductive graphite, superconductive carbon, acetylene black, carbon black, Ketjen black, carbon dots, carbon nanotubes, graphene, or carbon nanofibers. As an example, the binder includes, but is not limited to, at least one of styrene-butadiene rubber (SBR), water-based acrylic resin (Water-based acrylic resin), carboxymethyl cellulose (CMC), polyvinylidene difluoride (PVDF), polytetrafluoroethylene (PTFE), polyvinyl butyral (PVB), poly(ethylene-co-vinyl acetate) (EVA), or polyvinyl alcohol (PVA).

In some embodiments, based on a total mass of the positive electrode film layer, a mass percent of the conductive agent is greater than or equal to 0.5%. For example, the mass percent of the conductive agent is 0.5%, 1.0%, 1.5%, 2.0%, 2.5%, 3.0%, 3.5%, 4.0%, 4.5%, 5.0%, 6.0%, 7.0%, 8.0%, 9.0%, 10.0%, 11.0%, 12.0%, 13.0%, 14.0%, 15.0%, 16.0%, 17.0%, 18.0%, or a value falling within a range formed by any two thereof. Optionally, the mass percent of the conductive agent is 0.5% to 18%. Further, the mass percent of the conductive agent is 0.5% to 5%. When the mass percent of the conductive agent falls within an appropriate range, the single-side resistance of the positive electrode plate is lower.

In some embodiments, based on the total mass of the positive electrode film layer, the mass percent of the binder is less than or equal to 2.0%. When the mass percent of the binder falls within an appropriate range, the single-side resistance of the positive electrode plate is lower.

In some embodiments, the positive current collector may be a metal foil or a porous metal sheet, for example, a foil or porous sheet of metals such as aluminum, copper, nickel, titanium, or silver, or an alloy thereof. As an example, the positive current collector is an aluminum foil.

In some embodiments, the thickness of the positive current collector is 5 $\mu$m to 20 $\mu$m. For example, the thickness of the positive current collector is 5 $\mu$m, 6 $\mu$m, 7 $\mu$m, 8 $\mu$m, 9 $\mu$m, 10 $\mu$m, 11 $\mu$m, 12 $\mu$m, 13 $\mu$m, 14 $\mu$m, 15 $\mu$m, 16 $\mu$m, 17 $\mu$m, 18 $\mu$m, 19 $\mu$m, 20 $\mu$m, or a value falling within a range formed by any two thereof. Optionally, the thickness of the positive current collector is 6 $\mu$m to 18 $\mu$m. Further, the thickness of the positive current collector is 8 $\mu$m to 16 $\mu$m.

In some embodiments, the positive current collector includes two surfaces opposite to each other in a thickness direction of the current collector. The positive electrode film layer is disposed on either or both of the two opposite surfaces of the positive current collector. When the positive electrode film layer is disposed on both surfaces of the positive electrode current collector, the technical solution is deemed falling within the protection scope of this application as long as the parameters of the positive electrode film layer on any one of the surfaces satisfy the parameter range specified in this application.

The first positive active material may be prepared by a conventional method in this field. An exemplary synthesis method is as follows: mixing a lithium source, a cobalt source, an M1 element precursor, and an A element precursor, and sintering the mixture to obtain a first positive active material. The sintering atmosphere may be an oxygen-containing atmosphere. For example, the sintering is performed in an air atmosphere or an oxygen atmosphere. The concentration of $O_2$ in the sintering atmosphere is, for example, 70% to 100%. The sintering temperature and the sintering time may be adjusted according to the actual situation. For example, the sintering temperature is 700 °C to 1000 °C, and the sintering time is 8 h to 24 h.

As an example, the lithium source includes, but is not limited to, at least one of lithium oxide ($Li_2O$), lithium phosphate ($Li_3PO_4$), lithium dihydrogen phosphate ($LiH_2PO_4$), lithium acetate ($CH_3COOLi$), lithium hydroxide (LiOH), lithium carbonate ($Li_2CO_3$), or lithium nitrate ($LiNO_3$). As an example, the cobalt source includes, but is not limited to, at least one of cobalt sulfate, cobalt nitrate, cobalt chloride, cobalt oxalate, or cobalt acetate. As an example, the M1 element precursor includes, but is not limited to, at least one of an oxide of the M1 element, a nitric acid compound, a carbonic acid compound, a hydroxide compound, or an acetic acid compound. As an example, the A element precursor includes, but is not limited to, at least one of ammonium fluoride, lithium fluoride, hydrogen fluoride, ammonium chloride, lithium chloride, hydrogen chloride, ammonium bromide, lithium bromide, hydrogen bromide, ammonium nitrate, ammonium nitrite, ammonium carbonate, ammonium bicarbonate, ammonium sulfate, ammonium bisulfate, ammonium bisulfite, ammonium sulfite, ammonium hydrogen sulfide, hydrogen sulfide, lithium sulfide, ammonium sulfide, or elemental sulfur.

The second positive active material may be prepared by a conventional method in this field. An exemplary test method is as follows: mixing a lithium source, a nickel source, a copper source, a titanium source, an M2 element precursor, and a B element precursor, and sintering the mixture to obtain a second positive active material. The sintering atmosphere may be an inert atmosphere. For example, the sintering is performed in a nitrogen atmosphere or an argon atmosphere. The sintering temperature and the sintering time may be adjusted according to the actual situation. For example, the sintering temperature is 500 °C to 800 °C, and the sintering time is 8 h to 24 h.

As an example, the lithium source includes, but is not limited to, at least one of lithium oxide ($Li_2O$), lithium phosphate ($Li_3PO_4$), lithium dihydrogen phosphate ($LiH_2PO_4$), lithium acetate ($CH_3COOLi$), lithium hydroxide (LiOH), lithium carbonate ($Li_2CO_3$), or lithium nitrate ($LiNO_3$). As an example, the nickel source includes, but is not limited to, at least one of nickel sulfate, nickel nitrate, nickel chloride, nickel oxalate, or nickel acetate. As an example, the copper source includes, but is not limited to, at least one of copper sulfate, copper nitrate, copper chloride, copper oxalate, or copper acetate. As an example, the titanium source includes, but is not limited to, at least one of titanium sulfate, titanium nitrate, titanium chloride, titanium oxalate, or titanium acetate. As an example, the M2 element precursor includes, but is not limited to, at least one of an oxide of the M2 element, a nitric acid compound, a carbonic acid compound, a hydroxide compound, or an acetic acid compound. As an example, the B element precursor includes, but is not limited to, at least one of ammonium fluoride, lithium fluoride, hydrogen fluoride, ammonium chloride, lithium chloride, hydrogen chloride, ammonium bromide, lithium bromide, hydrogen bromide, ammonium nitrate, ammonium nitrite, ammonium carbonate, ammonium bicarbonate, ammonium sulfate, ammonium bisulfate, ammonium bisulfite, ammonium sulfite, ammonium hydrogen sulfide, hydrogen sulfide, lithium sulfide, ammonium sulfide, or elemental sulfur.

The positive electrode plate may be prepared by a conventional method in this field. A typical method for preparing the positive electrode plate is: dispersing the first positive active material, the second positive active material, and optionally the conductive agent and the binder in a solvent such as N-methyl-pyrrolidone (NMP for short) to form a homogeneous positive electrode slurry, coating a positive current collector with the positive electrode slurry, and performing steps such as oven-drying and cold pressing to obtain a positive electrode plate.

The positive electrode plate of this application does not exclude other positive active materials different from the first positive active material and the second positive active material. The specific types of other positive active materials are not particularly limited, and may be selected as required. As an example, other positive active materials include, but are not limited to, at least one of lithium iron phosphate, a composite of lithium iron phosphate and carbon, lithium manganese phosphate, a composite of lithium manganese phosphate and carbon, lithium manganese iron phosphate, or a composite of lithium manganese iron phosphate and carbon, or a modified compound thereof.

The positive electrode plate according to this application does not exclude other additional functional layers different from the positive electrode film layer. For example, in some embodiments, the positive electrode plate according to this application further includes a conductive undercoat layer (for example, formed of a conductive agent and a binder) disposed on a surface of the positive current collector and sandwiched between the positive current collector and the positive electrode film layer. In other embodiments, the positive electrode plate according to this application further includes a protection layer overlaying the surface of the positive electrode film layer.

The single-side resistance of the positive electrode plate bears the meaning well-known in the art, and may be measured by using an instrument and method known in the art. For example, the single-side resistance of the positive electrode plate is measured by a direct-current two-probe method. An exemplary test method is as follows: clamping an upper side and a lower side of a single-side-coated and cold-pressed positive electrode plate (if the positive electrode plate is coated on both sides, the positive electrode film layer may be wiped off from one side of the positive electrode plate first) in parallel between two conductive terminals of an internal resistance tester (for example, Hioki BT23562 internal resistance tester), and then applying a pressure to fix the electrode plate to measure the single-side resistance of the positive electrode plate. The diameter of each conductive terminal is 14 mm, and the applied pressure may be 15 MPa to 27 MPa.

Before testing, the positive electrode plate may be split into small pieces of a specified area (for example, 10 cm $\times$ 10 cm).

Before testing, the positive electrode film layer may be wiped off from one side of the positive electrode plate by using water or another solvent.

The compaction density of the positive electrode plate bears the meaning well-known in the art, and may be measured by using an instrument and method known in the art. For example, the compaction density may be calculated by a formula $P = m/v$, where $P$ (g/cm$^3$) is the compaction density of the positive electrode plate, $m$ (g) is the mass of the positive electrode film layer, and $v$ (cm$^3$) is the volume of the positive electrode film layer. Volume of the positive electrode film layer = area of the positive electrode film layer $\times$ thickness of the positive electrode film layer.

The single-side areal density of the positive electrode plate bears the meaning well-known in the art, and may be measured by using an instrument and method known in the art. For example, the single-side areal density may be calculated by a formula $Q = 1540.25 \times m/Ar$, where $Q$ (g/1540.25 mm$^2$) is the single-side areal density of the positive electrode plate, $m$ (g) is the mass of the positive electrode film layer, and $Ar$ (mm$^2$) is the area of the positive electrode film layer.

As an example, a method for measuring the mass of the positive electrode film layer is as follows: Weighing a single-side-coated and cold-pressed positive electrode plate (if the positive electrode plate is coated on both sides, just wiping off the positive electrode film layer on one side first) to obtain a weight, denoted as m1 (g); and wiping off the positive electrode film layer from the weighed positive electrode plate, and then weighing the positive electrode plate to obtain a weight, denoted as m0 (g); and calculating the mass of the positive electrode film layer by a formula m = m1 - m0.

It is hereby noted that, as a specimen for testing the parameters (including the single-side resistance, compaction density, and single-side areal density of the positive electrode plate), the positive electrode plate may be a freshly prepared and cold-pressed positive electrode plate, or a positive electrode plate obtained from a disassembled electrochemical device. If the positive electrode plate is coated on both sides, the positive electrode film layer may be wiped off from one side of the positive electrode plate first. For example, the positive electrode film layer may be wiped off by using water or another solvent.

An exemplary method for obtaining a positive electrode plate from an electrochemical device is as follows: Disassembling a fully discharged electrochemical device and taking out a positive electrode plate; soaking the positive electrode plate in an organic solvent (for example, dimethyl carbonate) for a period (for example, 30 min), and then taking out the positive electrode plate and drying the positive electrode plate at a specified temperature (for example, 80 °C) for a specified period (for example, 6 h).

**Electrochemical device**

A second aspect of this application provides an electrochemical device, including any device in which an electrochemical reaction occurs to implement conversion between chemical energy and electrical energy. Specific examples of the electrochemical device include all kinds of lithium primary batteries or lithium secondary batteries. Particularly, the lithium secondary batteries include a lithium metal secondary battery, a lithium-ion secondary battery, a lithium polymer secondary battery, or a lithium-ion polymer secondary battery.

In some embodiments, the electrochemical device according to this application includes a positive electrode plate, a negative electrode plate, a separator, and an electrolyte solution.

In some embodiments, the positive electrode plate, the negative electrode plate, and the separator may be made into an electrode assembly by winding or stacking.

The electrochemical device according to this application further includes an outer package configured to package the electrode assembly and the electrolyte solution. In some embodiments, the outer package may be a hard shell such as a hard plastic shell, an aluminum shell, a steel shell, or the like; or, may be a soft package such as a pouch-type package. The soft package may be made of a material such as at least one of polypropylene (PP), polybutylene terephthalate (PBT), or polybutylene succinate (PBS).

**[Positive electrode plate]**

The positive electrode plate used in the electrochemical device of this application is the positive electrode plate according to the first aspect of this application.

**[Negative electrode plate]**

The material, composition, and manufacturing method of the negative electrode plate used in the electrochemical device of this application may include any technology well-known in the prior art.

The negative electrode plate may be a metallic lithium sheet, or may be an electrode plate that includes a negative current collector and a negative electrode film layer disposed on at least one surface of the negative current collector. The negative electrode film layer typically includes a negative active material and optionally a conductive agent, a binder, and a thickener.

The specific type of the negative active material is not particularly limited, and may be selected as required. As an example, the negative active material includes but is not limited to at least one of natural graphite, artificial graphite, mesocarbon microbead (MCMB), hard carbon, soft carbon, silicon, a silicon-carbon composite, SiO, a Li-Sn alloy, a Li-Sn-O alloy, Sn, SnO, $SnO_2$, spinel-structured $Li_4Ti_5O_{12}$, or a Li-Al alloy.

The specific type of the conductive agent is not particularly limited, and may be selected as required. As an example, the conductive agent includes, but is not limited to, at least one of conductive graphite, superconductive carbon, acetylene black, carbon black, Ketjen black, carbon dots, carbon nanotubes, graphene, or carbon nanofibers.

The specific type of the binder is not particularly limited, and may be selected as required. As an example, the binder includes, but is not limited to, at least one of styrene-butadiene rubber (SBR), polyvinylidene difluoride (PVDF), polytetrafluoroethylene (PTFE), polyvinyl butyral (PVB), water-based acrylic resin (Water-based acrylic resin), or carboxymethyl cellulose.

The specific type of the thickener is not particularly limited, and may be selected as required. As an example, the thickener includes, but is not limited to, sodium carboxymethyl cellulose (CMC).

However, this application is not limited to such materials. The negative electrode plate in this application may contain other well-known materials suitable for use as a negative active material, a conductive agent, a binder, or a thickener.

In some embodiments, the negative current collector includes two surfaces opposite to each other in a thickness direction of the current collector. The negative electrode film layer is disposed on either or both of the two opposite surfaces of the negative current collector.

The negative current collector may be made of a metal foil or a porous metal sheet, for example, a foil or porous plate made of metal such as copper, nickel, titanium, or iron, or an alloy thereof. As an example, the negative current collector is a copper foil.

The negative electrode plate may be prepared by a conventional method in this field. Typically, a method for preparing the negative electrode plate includes: dispersing the negative active material and optionally the conductive agent, the binder, and the thickener in a solvent such as N-methyl-pyrrolidone (NMP) or deionized water to form a homogeneous negative electrode slurry, coating a negative current collector with the negative electrode slurry, and performing steps such as drying and cold-pressing to obtain a negative electrode plate.

The negative electrode plate according to this application does not exclude other additional functional layers different from the negative electrode film layer. For example, in some embodiments, the negative electrode plate according to this application further includes a conductive undercoat layer (for example, formed of a conductive agent and a binder) disposed on a surface of the negative current collector and sandwiched between the negative current collector and the negative electrode film layer. In other embodiments, the negative electrode plate according to this application further includes a protection layer overlaying the surface of the negative electrode film layer.

[Electrolyte solution]

The electrolyte solution serves to conduct active ions between the positive electrode plate and the negative electrode plate. The electrolyte solution for use in the electrochemical device of this application may be an electrolyte solution known in the prior art.

In some embodiments, the electrolyte solution includes an organic solvent, a lithium salt, and optionally a binder. The types of the organic solvent, the lithium salt, and the additive are not particularly limited, and may be selected according to actual needs.

In some embodiments, as an example, the lithium salt includes but is not limited to at least one of lithium hexafluorophosphate (LiPF$_6$), (lithium tetrafluoroborate (LiBF$_4$), lithium perchlorate (LiClO$_4$), lithium hexafluoroarsenate (LiAsF$_6$), lithium bisfluorosulfonimide (LiFSI), lithium bistrifluoromethanesulfonimide (LiTFSI), lithium trifluoromethanesulfonate (LiTFS), lithium difluoro(oxalato) borate (LiDFOB), lithium bis(oxalato) borate (LiBOB), lithium difluoropho-sphate (LiPO2F$_2$), lithium difluoro(bisoxalato) phosphate (LiDFOP), and lithium tetrafluoro(oxalato) phosphate (LiTFOP). Of the foregoing lithium salts, one may be used alone, or two or more may be used simultaneously.

In some embodiments, as an example, the organic solvent includes but is not limited to at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), or (ethylsulfonyl) ethane (ESE). Of the foregoing organic solvents, one may be used alone, or two or more may be used simultaneously. Optionally, two or more of the foregoing organic solvents are used simultaneously.

In some embodiments, the additive includes, but is not limited to, a negative electrode film-forming additive. As an example, such additives include, but are not limited to, at least one of fluoroethylene carbonate (FEC), vinylene carbonate (VC), vinyl ethylene carbonate (VEC), ethylene sulfate (DTD), propylene sulfate, ethylene sulfite (ES), 1,3-propane sultone (PS), 1,3-propene sultone (PST), sulfonate cyclic quaternary ammonium salt, succinic anhydride, succinonitrile (SN), adiponitrile (ADN), tris(trimethylsilane) phosphate (TMSP), or tris(trimethylsilane) borate (TMSB).

Based on the total mass of the electrolyte solution, an aggregate mass percent of the additives is 0% to 15%. Optionally, the aggregate mass percent of the additives is 0.5% to 15%.

In some embodiments, the additives include at least fluoroethylene carbonate (FEC). During the first charge-discharge cycle of the electrochemical device, a large amount of active lithium deintercalated from the second positive electrode material is intercalated into the negative active material, thereby leading to a further decrease in the true potential of the negative electrode. In addition, this makes the organic solvent in the electrolyte solution more prone to reduction reactions at the negative electrode, thereby resulting in a continuous increase in the thickness of the SEI film on the surface of the negative active material and a continuous increase in the impedance of the negative electrode, and in turn, impairing the cycle performance of the electrochemical device. The fluoroethylene carbonate in preference to the organic solvent undergoes the reduction reaction at the negative electrode to form an even and dense SEI film, thereby suppressing continuous reduction reactions of the organic solvent at the negative electrode, and suppressing the continuous increase in the thickness of the SEI film on the surface of the negative active material and the continuous increase in the impedance of the negative electrode. The fluoroethylene carbonate can also be synergistic with the second positive active material to facilitate the formation of a LiF-rich, even and dense SEI film on the surface of the negative active material after the first charge-discharge cycle of the electrochemical device, thereby reducing the continuous loss of active lithium. In addition, the fluoroethylene carbonate is more resistant to high-voltage oxidation at the positive electrode, and can favorably match a high-voltage positive active material, thereby further improving the energy density and cycle performance of electrochemical device, especially the cycle performance at a high voltage.

Therefore, when the electrolyte solution of this application includes fluoroethylene carbonate, it is convenient to form an evener, denser, and thinner SEI film after the first charge-discharge cycle of the electrochemical device, and prevent continuous reduction reaction of the organic solvent at the negative electrode. In this way, an evener and denser SEI film is formed on the surface of the negative active material at the same time as compensating for the irreversible loss of active lithium caused by the formation of the SEI film, thereby reducing the continuous loss of active lithium. Therefore, the electrochemical device of this application exhibits a high energy density, a long cycle life, and good C-rate performance concurrently.

Based on the total mass of the electrolyte solution, a mass percent of the fluoroethylene carbonate is 0% to 15%. For example, the mass percent of the fluoroethylene carbonate is 0%, 0.1%, 0.2%, 0.5%, 1.0%, 1.5%, 2.0%, 2.5%, 3.0%, 3.5%, 4.0%, 4.5%, 5.0%, 6.0%, 7.0%, 8.0%, 9.0%, 10%, 11%, 12%, 13%, 14%, 15%, or a value falling within a range formed by any two thereof. Optionally, the mass percent of the fluoroethylene carbonate is 0.5% to 15%. Further, the mass percent of the fluoroethylene carbonate is 0.5% to 5%.

The electrolyte solution may be prepared by a conventional method in this field. For example, the electrolyte solution may be obtained by mixing well an organic solvent, a lithium salt, and an optional additive. The order of adding the ingredients is not particularly limited. For example, the lithium salt and the optional additive may be added together to the organic solvent and mixed well to obtain the electrolyte solution; or, the lithium salt may be added to the organic solvent, and then the optional additive is added into the organic solvent and mixed well to obtain the electrolyte solution.

**[Separator]**

Disposed between the positive electrode plate and the negative electrode plate, the separator primarily serves to prevent a short circuit between the positive electrode plate and the negative electrode plate while allowing passage of active ions. The type of the separator is not particularly limited in this application, and may be any well-known porous separator that is highly stable both chemically and mechanically. The separator may be a single-layer film or a multilayer composite film. When the separator is a multilayer composite film, materials in different layers may be identical or different.
In some embodiments, the separator includes a polymer or an inorganic compound or the like formed from a material that is stable to the electrolyte solution according to this application.
For example, the separator may include a substrate layer and optionally a surface treatment layer. The substrate layer is a non-woven fabric, film or composite film, each having a porous structure. The material of the substrate layer includes at least one of: polyethylene, polypropylene, polyethylene terephthalate, and polyimide. As an example, the material of the substrate layer may be a polypropylene porous film, a polyethylene porous film, a polypropylene non-woven fabric, a polyethylene non-woven fabric, or a polypropylene-polyethylene-polypropylene porous composite film. The surface treatment layer may be disposed on the surface of the substrate layer or not. In some embodiments, a surface treatment layer is disposed on at least one surface of the substrate layer. The surface treatment layer may be a polymer layer or an inorganic compound layer, or a layer compounded of a polymer and an inorganic compound.
The inorganic compound layer includes inorganic particles and a binder. The inorganic particles include at least one of aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder includes at least one of polyvinylidene fluoride, vinylidene poly(fluoride-co-hexafluoropropylene), polyamide, polyacrylonitrile, polyacrylate, polyacrylic acid, polyacrylic acid sodium salt, polyvinylpyrrolidone, polyvinyl ether, polymethyl methacrylate, polytetrafluoroethylene, or polyhexafluoropropylene.
The polymer layer includes a polymer. The material of the polymer includes at least one of polyamide, polyacrylonitrile, an acrylate polymer, polyacrylic acid, polyacrylic acid sodium salt, polyvinylpyrrolidone, polyvinyl ether, polyvinylidene fluoride, or poly(vinylidene fluoride-co-hexafluoropropylene).

**Electronic device**

A third aspect of this application provides an electronic device. The electronic device includes the electrochemical device according to the second aspect of this application. The electronic device is not particularly limited herein, and may be any electronic device known in the prior art. In some embodiments, the electronic device may include, but is not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, or the like.

**Embodiments**

The following embodiments are more detailed descriptions of the subject-matter disclosed herein. The embodiments are merely intended as illustrative descriptions because, evidently, a person skilled in the art may make various modifications and changes to such embodiments without departing from the disclosure hereof. Unless otherwise specified, all fractions, percentages, and ratios mentioned in the following embodiments are values by mass. All reagents used in the embodiments are commercially available or can be synthesized according to conventional methods, and can be directly put into use without a need of further processing. All the instruments used in the embodiments are commercially available.

**Embodiment 1**

**Preparing a positive electrode plate**

Mixing a first positive active material $LiCoO_2$, a second positive active material $Li_2Ni_{0.498}Cu_{0.498}Ti_{0.002}O_2$, a binder PVDF, and conductive agent carbon black at a mass ratio of 92.6: 5.0: 1.3: 1.1, adding an appropriate amount of NMP solvent, stirring the solution with a vacuum mixer to obtain a positive electrode slurry, applying the positive electrode slurry evenly onto both surfaces of the positive current collector aluminum foil, and then performing drying the current collector in a 120 °C oven, and performing steps such as cold-pressing and slitting to obtain a positive electrode plate.

**Preparing a negative electrode plate**

Mixing the artificial graphite and silicon suboxide as negative active materials, polyacrylic acid (PAA) as a binder, and carbon black as a conductive agent at a mass ratio of 85.9: 10.0: 2.8: 1.3, adding an appropriate amount of deionized water as a solvent, stirring the solution with a vacuum mixer to obtain a negative electrode slurry, applying the negative electrode slurry evenly onto both surfaces of a negative current collector copper foil, drying the current collector in a 120 °C oven, and then performing steps such as cold-pressing and slitting to obtain a negative electrode plate.

**Preparing an electrolyte solution**

Mixing ethylene carbonate (EC), ethyl methyl carbonate (EMC), and diethyl carbonate (DEC) at a volume ratio of 1: 1: 1 to obtain an organic solvent. Dissolving $LiPF_6$ in the organic solvent, and then adding fluoroethylene carbonate (FEC) and stirring well to obtain an electrolyte solution. In the electrolyte solution, the concentration of $LiPF_6$ is 1 mol/L. Based on the total mass of the electrolyte solution, the mass percent of the fluoroethylene carbonate is 5%.

**Preparing a separator**

Using a 14 $\mu$m-thick porous polypropylene film (manufactured by Celgard) as a separator.

**Preparing a lithium-ion secondary battery**

Stacking the positive electrode plate, the separator, and the negative electrode plate sequentially, and winding the stacked structure to obtain an electrode assembly. Placing the electrode assembly into an outer package, injecting the electrolyte solution, and performing steps such as sealing, standing, chemical formation, and shaping to obtain a lithium-ion secondary battery.

**Embodiments 2 to 28 and Comparative Embodiments 1 to 5**

The preparation method of the lithium-ion secondary battery is similar to that in Embodiment 1 except that the relevant parameters for preparing the positive electrode plate and the electrolyte solution are adjusted, as detailed in Table 1 in which "/" indicates absence of the corresponding constituent.

**Table 1**

| Serial number | First positive active material | | Second positive active material | | Content of FEC (%) |
|---|---|---|---|---|---|
| | Type | Content (%) | Type | **Content** (%) | |
| Embodiment 1 | $LiCoO_2$ | 92.60 | $Li_2Ni_{0.498}Cu_{0.498}Ti_{0.002}O_2$ | 5 | 5 |

(continued)

| Serial number | First positive active material | | Second positive active material | | Content of FEC (%) |
|---|---|---|---|---|---|
| | Type | Content (%) | Type | **Content** (%) | |
| Embodiment 2 | $LiCo_{0.9}Ni_{0.1}O_2$ | 92.60 | $Li_2Ni_{0.498}Cu_{0.498}Ti_{0.002}O_2$ | 5 | 5 |
| Embodiment 3 | $LiCo_{0.9}Ni_{0.05}Mn_{0.05}O_2$ | 92.60 | $Li_2Ni_{0.498}Cu_{0.498}Ti_{0.002}O_2$ | 5 | 5 |
| Embodiment 4 | $Li_{0.95}Co_{0.99}Al_{0.01}O_{1.95}F_{0.05}$ | 92.60 | $Li_2Ni_{0.498}Cu_{0.498}Ti_{0.002}O_2$ | 5 | 5 |
| Embodiment 5 | $LiCoO_2$ | 92.60 | $Li_2Ni_{0.446}Cu_{0.446}Ti_{0.004}Mn_{0.1}O_2$ | 5 | 5 |
| Embodiment 6 | $LiCoO_2$ | 92.60 | $Li_2Ni_{0.442}Cu_{0.442}Ti_{0.008}Mn_{0.05}Co_{0.05}O_2$ | 5 | 5 |
| Embodiment 7 | $LiCoO_2$ | 92.60 | $Li_{1.95}Ni_{0.498}Cu_{0.498}Ti_{0.002}O_{1.95}F_{0.05}$ | 5 | 5 |
| Embodiment 8 | $LiCoO_2$ | 92.60 | $Li_{1.95}Ni_{0.498}Cu_{0.498}Ti_{0.002}O_{1.9}S_{0.05}F_{0.05}$ | 5 | 5 |
| Embodiment 9 | $LiCoO_2$ | 96.62 | $Li_2Ni_{0.498}Cu_{0.498}Ti_{0.002}O_2$ | 0.98 | 5 |
| Embodiment 10 | $LiCoO_2$ | 96.10 | $Li_2Ni_{0.498}Cu_{0.498}Ti_{0.002}O_2$ | 1.50 | 5 |
| Embodiment 11 | $LiCoO_2$ | 95.60 | $Li_2Ni_{0.498}Cu_{0.498}Ti_{0.002}O_2$ | 2 | 5 |
| Embodiment 12 | $LiCoO_2$ | 94.60 | $Li_2Ni_{0.498}Cu_{0.498}Ti_{0.002}O_2$ | 3 | 5 |
| Embodiment 13 | $LiCoO_2$ | 89.60 | $Li_2Ni_{0.498}Cu_{0.498}Ti_{0.002}O_2$ | 8 | 5 |
| Embodiment 14 | $LiCoO_2$ | 87.60 | $Li_2Ni_{0.498}Cu_{0.498}Ti_{0.002}O_2$ | 10 | 5 |
| Embodiment 15 | $LiCoO_2$ | 81.40 | $Li_2Ni_{0.498}Cu_{0.498}Ti_{0.002}O_2$ | 16.2 | 5 |
| Embodiment 16 | $LiCoO_2$ | 92.60 | $Li_2Ni_{0.498}Cu_{0.498}Ti_{0.002}O_2$ | 5 | 5 |
| Embodiment 17 | $LiCoO_2$ | 92.60 | $Li_2Ni_{0.498}Cu_{0.498}Ti_{0.002}O_2$ | 5 | 5 |
| Embodiment 18 | $LiCoO_2$ | 92.60 | $Li_2Ni_{0.498}Cu_{0.498}Ti_{0.002}O_2$ | 5 | 5 |
| Embodiment 19 | $LiCoO_2$ | 92.60 | $Li_2Ni_{0.498}Cu_{0.498}Ti_{0.002}O_2$ | 5 | 0.5 |
| Embodiment 20 | $LiCoO_2$ | 92.60 | $Li_2Ni_{0.498}Cu_{0.498}Ti_{0.002}O_2$ | 5 | 15 |
| Embodiment 21 | $LiCoO_2$ | 92.60 | $Li_2Ni_{0.498}Cu_{0.498}Ti_{0.002}O_2$ | 5 | 5 |
| Embodiment 22 | $LiCoO_2$ | 92.60 | $Li_2Ni_{0.498}Cu_{0.498}Ti_{0.002}O_2$ | 5 | 5 |
| Embodiment 23 | $LiCoO_2$ | 97.00 | $Li_2Ni_{0.498}Cu_{0.498}Ti_{0.002}O_2$ | 0.6 | 5 |

(continued)

| Serial number | First positive active material | | Second positive active material | | Content of FEC (%) |
|---|---|---|---|---|---|
| | Type | Content (%) | Type | **Content** (%) | |
| Embodiment 24 | $LiCoO_2$ | 77.60 | $Li_2Ni_{0.498}Cu_{0.498}Ti_{0.002}O_2$ | 20 | 5 |
| Embodiment 25 | $LiCoO_2$ | 92.60 | $Li_2Ni_{0.498}Cu_{0.498}Ti_{0.002}O_2$ | 5 | 5 |
| Embodiment 26 | $LiCoO_2$ | 92.60 | $Li_2Ni_{0.498}Cu_{0.498}Ti_{0.002}O_2$ | 5 | 5 |
| Embodiment 27 | $LiCoO_2$ | 92.60 | $Li_2Ni_{0.498}Cu_{0.498}Ti_{0.002}O_2$ | 5 | / |
| Embodiment 28 | $LiCoO_2$ | 92.60 | $Li_2Ni_{0.498}Cu_{0.498}Ti_{0.002}O_2$ | 5 | 20 |
| Comparative Embodiment 1 | $LiCoO_2$ | 97.60 | / | / | / |
| Comparative Embodiment 2 | / | / | $Li_2NiO_2$ | 97.6 | / |
| Comparative Embodiment 3 | / | / | $Li_2CuO_2$ | 97.6 | / |
| Comparative Embodiment 4 | $LiCoO_2$ | 92.60 | $Li_2NiO_2$ | 5 | / |
| Comparative Embodiment 5 | $LiCoO_2$ | 92.60 | $Li_2Ni_{0.5}Cu_{0.5}O_2$ | 5 | / |

**Test Part**

The single-side resistance of the positive electrode plate, the compaction density of the positive electrode plate, and the single-side areal density of the positive electrode plate may be tested in accordance with the methods described herein above.

(1) Testing the high-temperature cycle performance of a lithium-ion secondary battery Charging a lithium-ion secondary battery at a constant current rate of 1.5 C at 45 °C until the voltage reaches 4.5 V, and then charging the battery at a constant voltage until the current is less than or equal to 0.05 C so that the lithium-ion secondary battery is in a fully charged state. Recording the charge capacity at this time as a 1st-cycle charge capacity; leaving the lithium-ion secondary battery to stand for 5 minutes, and then discharging the battery at a constant current rate of 1 C until the voltage drops to 3.0 V, thereby completing one charge-discharge cycle. Recording the discharge capacity at this time as a 1st-cycle discharge capacity. Repeating the charge-discharge cycle of the lithium-ion secondary battery in the way described above, and recording the discharge capacity at the end of each cycle until the discharge capacity of the lithium-ion secondary battery fades to 80% of the 1st-cycle discharge capacity. The number of cycles at this time characterizes the cycle performance of the lithium-ion secondary battery. The higher the number of cycles of the lithium-ion secondary battery, the higher the cycle performance.
(2) Testing the rate performance of the lithium-ion secondary battery

Charging a lithium-ion secondary battery at a constant current rate of 0.2 C at 25 °C until the voltage reaches 4.5 V, and then charging the battery at a constant voltage until the current is less than or equal to 0.05 C; leaving the lithium-ion secondary battery to stand for 5 minutes, and then discharging the battery at a constant current rate of 0.2 C until the voltage drops to 3.0 V, and recording the 0.2 C-rate discharge capacity.

Charging the lithium-ion secondary battery at a constant current rate of 0.2 C at 25 °C until the voltage reaches 4.5 V, and then charging the battery at a constant voltage until the current is less than or equal to 0.05 C; leaving the lithium-ion secondary battery to stand for 5 minutes, and then discharging the battery at a constant current rate of 2 C until the voltage drops to 3.0 V, and recording the 2 C-rate discharge capacity.

2C/0.2C discharge capacity retention rate of the lithium-ion secondary battery (%) = 2 C-rate discharge capacity/0.2 C-rate discharge capacity × 100%.

Table 2 shows performance test results of Embodiments 1 to 28 and Comparative Embodiments 1 to 5.

**Table 2**

| Serial number | Positive electrode plate | | | | Lithium-ion secondary battery | |
|---|---|---|---|---|---|---|
| | Single-side resistance R (Ω) | Compaction density P (g/cm³) | Single-side areal density Q (g/1540.25 mm²) | R×P/-Q | Number of cycles | 2 C/0.2 C discharge capacity retention rate (%) |
| Embodiment 1 | 1 | 4.2 | 0.26 | 16.15 | 519 | 93.8 |
| Embodiment 2 | 1 | 4.2 | 0.26 | 16.15 | 514 | 93.7 |
| Embodiment 3 | 1 | 4.2 | 0.26 | 16.15 | 533 | 93.9 |
| Embodiment 4 | 1 | 4.2 | 0.26 | 16.15 | 508 | 93.5 |
| Embodiment 5 | 1 | 4.2 | 0.26 | 16.15 | 512 | 94.0 |
| Embodiment 6 | 1 | 4.2 | 0.26 | 16.15 | 523 | 93.8 |
| Embodiment 7 | 1 | 4.2 | 0.26 | 16.15 | 518 | 94.0 |
| Embodiment 8 | 1 | 4.2 | 0.26 | 16.15 | 526 | 94.1 |
| Embodiment 9 | 1 | 4.2 | 0.26 | 16.15 | 431 | 94.2 |
| Embodiment 10 | 1 | 4.2 | 0.26 | 16.15 | 459 | 94.0 |
| Embodiment 11 | 1 | 4.2 | 0.26 | 16.15 | 477 | 93.9 |
| Embodiment 12 | 1 | 4.2 | 0.26 | 16.15 | 498 | 94.0 |
| Embodiment 13 | 1 | 4.2 | 0.26 | 16.15 | 558 | 93.8 |
| Embodiment 14 | 1 | 4.2 | 0.26 | 16.15 | 535 | 93.6 |
| Embodiment 15 | 1 | 4.2 | 0.26 | 16.15 | 501 | 93.3 |
| Embodiment 16 | 0.4 | 4 | 0.36 | 4.44 | 508 | 93.0 |
| Embodiment 17 | 1.5 | 4.3 | 0.22 | 29.32 | 521 | 93.7 |
| Embodiment 18 | 2.5 | 4.1 | 0.34 | 30.15 | 511 | 93.4 |

(continued)

| Serial number | Positive electrode plate | | | R×P/-Q | Lithium-ion secondary battery | |
|---|---|---|---|---|---|---|
| | Single-side resistance R (Ω) | Compaction density P (g/cm³) | Single-side areal density Q (g/1540.25 mm²) | | Number of cycles | 2 C/0.2 C discharge capacity retention rate (%) |
| Embodiment 19 | 1 | 4.2 | 0.26 | 16.15 | 512 | 93.8 |
| Embodiment 20 | 1 | 4.2 | 0.26 | 16.15 | 569 | 93.5 |
| Embodiment 21 | 2.19 | 4.28 | 0.26 | 36 | 508 | 93.4 |
| Embodiment 22 | 0.13 | 4.2 | 0.27 | 2 | 516 | 93.8 |
| Embodiment 23 | 1 | 4.2 | 0.26 | 16.15 | 380 | 94.0 |
| Embodiment 24 | 1 | 4.2 | 0.26 | 16.15 | 425 | 81.9 |
| Embodiment 25 | 4 | 3.8 | 0.16 | 95 | 381 | 91.3 |
| Embodiment 26 | 0.2 | 1.6 | 0.38 | 0.84 | 327 | 87.1 |
| Embodiment 27 | 1 | 4.2 | 0.26 | 16.15 | 304 | 93.9 |
| Embodiment 28 | 1 | 4.2 | 0.26 | 16.15 | 424 | 93.1 |
| Comparative Embodiment 1 | 1 | 4.2 | 0.26 | 16.15 | 278 | 94.1 |
| Comparative Embodiment 2 | 1 | 3.7 | 0.26 | 14.23 | 1 | 74.4 |
| Comparative Embodiment 3 | 1 | 3.7 | 0.26 | 14.23 | 1 | 75.1 |
| Comparative Embodiment 4 | 1 | 4.2 | 0.26 | 16.15 | 293 | 93.2 |
| Comparative Embodiment 5 | 1 | 4.2 | 0.26 | 16.15 | 301 | 93.4 |

FIG. 1 is an X-ray diffraction pattern of a second positive active material tested after first-cycle charging according to Embodiment 1. Referring to FIG. 1, the first-cycle Coulombic efficiency of the second positive active material is relatively low. After the first-cycle charging of the second positive active material, characteristic diffraction peaks are exhibited at positions corresponding to a diffraction angle 2θ of 36° to 38°, 42° to 44°, and 62° to 64°, respectively. As can be seen from the test results in Table 2, the positive electrode plate of this application can give full play to the synergistic effect between the first positive active material and the second positive active material, and effectively compensate for the irreversible loss of active lithium caused by the formation of the SEI film on the surface of the negative active material, thereby improving the energy density and cycle performance of the lithium-ion secondary battery.

As can be seen from the test results in Table 2, by reasonably designing the single-side resistance, compaction density, and single-side areal density of the positive electrode plate, and by making the positive electrode plate satisfy $2 \leq R \times P/Q \leq 36$, this application can further improve the C-rate performance and cycle performance of the lithium-ion secondary battery, so that the lithium-ion secondary battery exhibits a high energy density, a long cycle life, and good C-rate performance concurrently.

As can be seen from the test results in Table 2, when the electrolyte solution includes fluoroethylene carbonate, it is convenient to form an evener, denser, and thinner SEI film after the first charge-discharge cycle of the lithium-ion secondary battery, and prevent continuous reduction reactions of the organic solvent at the negative electrode, thereby further improving the cycle performance of the lithium-ion secondary battery. What is described above is merely specific embodiments of this application, but is not intended to limit the protection scope of this application. Various equivalent modifications and replacements conceivable by any person skilled in the art without departing from the technical scope disclosed herein still fall within the protection scope of this application. Therefore, the protection scope of this application is subject to the protection scope of the claims.

**Claims**

1. A positive electrode plate, comprising a positive electrode film layer, **characterized in that**, the positive electrode film layer comprises a first positive active material represented by Chemical Formula 1 and a second positive active material represented by Chemical Formula 2:

$$Li_{1+x}Co_yM1_{1-y}O_{2-z}A_z \qquad \text{Chemical Formula 1,}$$

$$Li_{2+r}Ni_pCu_qTi_uM2_vO_{2-s}B_s \qquad \text{Chemical Formula 2,}$$

$-0.1 \leq x \leq 0.2$, $0.8 \leq y \leq 1$, $0 \leq z \leq 0.2$, M1 comprises at least one of Ni, Mn, Al, Mg, Ti, Zr, La, Y, Fe, Cr, V, Zn, Ru, Rh, Ga, Pd, Pt, Mo, W, Sb, Nb, Se, Te, or Ce; and A comprises at least one of S, N, P, F, Cl, or Br;
$-0.2 \leq r \leq 0.2$, $0 < p < 1$, $0 < q < 1$, $0 < u \leq 0.01$, $0 \leq v \leq 0.2$, $0 < p+q+u+v \leq 1$, $0 \leq s < 0.2$; M2 comprises at least one of Mn, Fe, Co, Al, V, Cr, Nb, Mg, Zr, La, Y, Zn, Ru, Rh, Ga, Pd, Pt, Mo, W, Sb, Nb, Se, Te, or Ce; and B comprises at least one of S, N, P, F, Cl, or Br.

2. The positive electrode plate according to claim 1, **characterized in that**, the first positive active material satisfies at least one of conditions (1) to (5):

   (1)

   $$-0.05 \leq x \leq 0.1;$$

   (2)

   $$0.8 \leq y < 1;$$

   (3)

   $$0 < z \leq 0.2;$$

   (4) M1 comprises at least one of Ni, Mn, Al, Mg, Ti, Zr, La, Y, Fe, Cr, V, Zn, or Rh; or
   (5) A comprises at least one of S or F.

3. The positive electrode plate according to any one of claims 1 to 2, **characterized in that**, the second positive active material satisfies at least one of conditions (6) to (13):

   (6)

   $$-0.1 \leq r \leq 0.1;$$

(7)
$$0.39 \leq p < 0.5;$$

(8)
$$0.39 \leq q < 0.5;$$

(9)
$$0 < u \leq 0.005;$$

(10)
$$0 < v \leq 0.2;$$

(11)
$$0 < s \leq 0.2;$$

(12) M2 comprises at least one of Mn, Fe, Co, Al, V, Cr, Nb, Mg, Zr, or Zn; or
(13) B comprises at least one of S or F.

4. The positive electrode plate according to any one of claims 1 to 3, **characterized in that**, a mass ratio between the first positive active material and the second positive active material is 5: 1 to 99: 1.

5. The positive electrode plate according to any one of claims 1 to 4, **characterized in that**, based on a total mass of the positive electrode film layer, a mass percent of the first positive active material is 80% to 98%.

6. The positive electrode plate according to any one of claims 1 to 5, **characterized in that**, the positive electrode plate satisfies: $2 \leq R \times P/Q \leq 36$; $R\ \Omega$ is a single-side resistance of the positive electrode plate; $P\ g/cm^3$ is a compaction density of the positive electrode plate; and $Q\ g/1540.25\ mm^2$ is a single-side areal density of the positive electrode plate.

7. The positive electrode plate according to any one of claims 1 to 6, **characterized in that**, a single-side resistance of the positive electrode plate is $R\ \Omega$, satisfying: $R \leq 3$.

8. The positive electrode plate according to any one of claims 1 to 7, **characterized in that**, a compaction density of the positive electrode plate is $P\ g/cm^3$, and $4.0 \leq P \leq 4.3$.

9. The positive electrode plate according to any one of claims 1 to 8, **characterized in that**, a single-side areal density of the positive electrode plate is $Q\ g/1540.25\ mm^2$, and $0.16 \leq Q \leq 0.38$.

10. The positive electrode plate according to any one of claims 1 to 9, **characterized in that**, the second positive active material belongs to an *Immm* space group.

11. The positive electrode plate according to any one of claims 1 to 10, **characterized in that**, in an X-ray diffraction pattern of the second positive active material determined after first-cycle charging, characteristic diffraction peaks are exhibited at positions corresponding to a diffraction angle 2θ of 36° to 38°, 42° to 44°, and 62° to 64°, respectively.

12. An electrochemical device, comprising the positive electrode plate according to any one of claims 1 to 11.

13. The electrochemical device according to claim 12, further comprising an electrolyte solution, wherein the electrolyte solution comprises a negative electrode film-forming additive; and
based on a total mass of the electrolyte solution, a mass percent of the negative electrode film-forming additive is 0% to 15%.

14. The electrochemical device according to claim 13, **characterized in that**, the negative electrode film-forming additive comprises at least one of fluoroethylene carbonate, vinylene carbonate, vinyl ethylene carbonate, ethylene sulfate, propylene sulfate, ethylene sulfite, 1,3-propane sultone, 1,3-propene sultone, sulfonate cyclic quaternary ammonium salt, succinic anhydride, succinonitrile, adiponitrile, tris(trimethylsilane)phosphate, or tris(trimethylsilane)borate.

15. An electronic device, comprising the electrochemical device according to any one of claims 12 to 14.

**Patentansprüche**

1. Positive Elektrodenplatte, die eine positive Elektrodenfilmschicht umfasst, **dadurch gekennzeichnet, dass** die positive Elektrodenfilmschicht ein erstes positives Aktivmaterial, das durch die chemische Formel 1 dargestellt ist, und ein zweites positives Aktivmaterial, das durch die chemische Formel 2 dargestellt ist, umfasst:

$$Li_{1+x}Co_yM1_{1-y}O_{2-z}A_z \qquad \text{chemische Formel 1,}$$

$$Li_{2+r}Ni_pCu_qTi_uM2_vO_{2-s}B_s \qquad \text{chemische Formel 2,}$$

   $-0{,}1 \leq x \leq 0{,}2$, $0{,}8 \leq y \leq 1$, $0 \leq z \leq 0{,}2$, M1 umfasst mindestens einen von Ni, Mn, Al, Mg, Ti, Zr, La, Y, Fe, Cr, V, Zn, Ru, Rh, Ga, Pd, Pt, Mo, W, Sb, Nb, Se, Te oder Ce; und A umfasst mindestens einen von S, N, P, F, Cl oder Br; $-0{,}2 \leq r \leq 0{,}2$, $0 < p < 1$, $0 < q < 1$, $0 < u \leq 0{,}01$, $0 \leq v \leq 0{,}2$, $0 < p + q + u + v \leq 1$, $0 \leq s < 0{,}2$; M2 umfasst mindestens einen von Mn, Fe, Co, Al, V, Cr, Nb, Mg, Zr, La, Y, Zn, Ru, Rh, Ga, Pd, Pt, Mo, W, Sb, Nb, Se, Te oder Ce; und B umfasst mindestens einen von S, N, P, F, Cl oder Br.

2. Positive Elektrodenplatte nach Anspruch 1, **dadurch gekennzeichnet, dass** das erste positive Aktivmaterial mindestens eine der Bedingungen (1) bis (5) erfüllt:

   (1)

   $$-0{,}05 \leq x \leq 0{,}1;$$

   (2)

   $$0{,}8 \leq y < 1;$$

   (3)

   $$0 < z \leq 0{,}2;$$

   (4) M1 umfasst mindestens einen von Ni, Mn, Al, Mg, Ti, Zr, La, Y, Fe, Cr, V, Zn, oder Rh; oder
   (5) A umfasst mindestens einen von S oder F.

3. Positive Elektrodenplatte nach einem der Ansprüche 1 bis 2, **dadurch gekennzeichnet, dass** das zweite positive Aktivmaterial mindestens eine der Bedingungen (6) bis (13) erfüllt:

   (6)

   $$-0{,}1 \leq r \leq 0{,}1;$$

   (7)

   $$0{,}39 \leq p < 0{,}5;$$

   (8)

$$0,39 \leq q < 0,5;$$

(9)

$$0 < u \leq 0,005;$$

(10)

$$0 < v \leq 0,2;$$

(11)

$$0 < s \leq 0,2;$$

(12) M2 umfasst mindestens einen von Mn, Fe, Co, Al, V, Cr, Nb, Mg, Zr oder Zn; oder
(13) B umfasst mindestens einen von S oder F.

4. Positive Elektrodenplatte nach einem der Ansprüche 1 bis 3, **dadurch gekennzeichnet, dass** ein Massenverhältnis zwischen dem ersten positiven Aktivmaterial und dem zweiten positiven Aktivmaterial 5: 1 bis 99: 1.

5. Positive Elektrodenplatte nach einem der Ansprüche 1 bis 4, **dadurch gekennzeichnet, dass** basierend auf einer Gesamtmasse der positiven Elektrodenfilmschicht ein Massenprozentsatz des ersten positiven Aktivmaterials 80 % bis 98 % beträgt.

6. Positive Elektrodenplatte nach einem der Ansprüche 1 bis 5, **dadurch gekennzeichnet, dass** die positive Elektrodenplatte erfüllt: $2 \leq R \times P/Q \leq 36$; R $\Omega$ ist ein einseitiger Widerstand der positiven Elektrodenplatte; P $g/cm^3$ ist eine Verdichtungsdichte der positiven Elektrodenplatte; und Q $g/1540,25$ $mm^2$ ist eine einseitige Flächendichte der positiven Elektrodenplatte.

7. Positive Elektrodenplatte nach einem der Ansprüche 1 bis 6, **dadurch gekennzeichnet, dass** ein einseitiger Widerstand der positiven Elektrodenplatte R $\Omega$ beträgt, der erfüllt: $R \leq 3$.

8. Positive Elektrodenplatte nach einem der Ansprüche 1 bis 7, **dadurch gekennzeichnet, dass** eine Verdichtungsdichte der positiven Elektrodenplatte P $g/cm^3$ und $4,0 \leq P \leq 4,3$ beträgt.

9. Positive Elektrodenplatte nach einem der Ansprüche 1 bis 8, **dadurch gekennzeichnet, dass** eine einseitige Flächendichte der positiven Elektrodenplatte Q $g/1540,25$ $mm^2$ beträgt und $0,16 \leq Q \leq 0,38$.

10. Positive Elektrodenplatte nach einem der Ansprüche 1 bis 9, **dadurch gekennzeichnet, dass** das zweite positive Aktivmaterial zu einer Immm-Raumgruppe gehört.

11. Positive Elektrodenplatte nach einem der Ansprüche 1 bis 10, **dadurch gekennzeichnet, dass** in einem Röntgenbeugungsmuster des zweiten positiven Aktivmaterials, das nach dem ersten Ladezyklus bestimmt wurde, charakteristische Beugungspeaks an Positionen auftreten, die einem Beugungswinkel 20 von 36° bis 38°, 42° bis 44° bzw. 62° bis 64° entsprechen.

12. Elektrochemische Vorrichtung, die die positive Elektrodenplatte nach einem der Ansprüche 1 bis 11 umfasst.

13. Elektrochemische Vorrichtung nach Anspruch 12, die ferner eine Elektrolytlösung umfasst, wobei die Elektrolytlösung ein Additiv zur Bildung eines negativen Elektrodenfilms umfasst; und basierend auf einer Gesamtmasse der Elektrolytlösung ein Massenprozentsatz des Additivs zur Bildung des negativen Elektrodenfilms 0 % bis 15 % beträgt.

14. Elektrochemische Vorrichtung nach Anspruch 13, **dadurch gekennzeichnet, dass** das Additiv zur Bildung des negativen Elektrodenfilms mindestens eines aus Fluorethylencarbonat, Vinylencarbonat, Vinylethylencarbonat, Ethylensulfat, Propylensulfat, Ethylensulfit, 1,3-Propansulton, 1,3-Propensulton, sulfoniertem cyclischem quaternärem Ammoniumsalz, Succinsäureanhydrid, Succinonitril, Adiponitril, Tris(trimethylsilan)phosphat oder Tris(trimethylsilan)borat umfasst.

**15.** Elektronische Vorrichtung, die die elektrochemische Vorrichtung nach einem der Ansprüche 12 bis 14 umfasst.

**Revendications**

**1.** Une plaque d'électrode positive comprenant une couche de film d'électrode positive, **caractérisée en ce que** la couche de film d'électrode positive comprend un premier matériau actif positif représenté par la Formule Chimique 1 et un second matériau actif positif représenté par la Formule Chimique 2 :

$$Li_{1+x}Co_yM1_{1-y}O_{2-z}A_z \qquad \text{Formule Chimique 1}$$

$$Li_{2+r}Ni_pCu_qTi_uM2_vO_{2-s}B_s \qquad \text{Formule Chimique 2,}$$

$-0,1 \leq x \leq 0,2$ ; $0,8 \leq y \leq 1$ ; $0 \leq z \leq 0,2$ ; $M_1$ comprend au moins l'un parmi Ni, Mn, Al, Mg, Ti, Zr, La, Y, Fe, Cr, V, Zn, Ru, Rh, Ga, Pd, Pt, Mo, W, Sb, Nb, Se, Te ou Ce ; et A comprend au moins l'un parmi S, N, P, F, Cl ou Br ;
$-0,2 \leq r \leq 0,2$ ; $0 < p < 1$ ; $0 < q \leq 1$ ; $0 \leq u \leq 0,01$ ; $0 \leq v \leq 0,2$ ; $0 < p + q + u + v \leq 1$ ; $0 \leq s < 0,2$ ; $M_2$ comprend au moins l'un parmi Mn, Fe, Co, Al, V, Cr, Nb, Mg, Zr, La, Y, Zn, Ru, Rh, Ga, Pd, Pt, Mo, W, Sb, Nb, Se, Te ou Ce ; et B comprend au moins l'un parmi S, N, P, F, Cl ou Br.

**2.** La plaque d'électrode positive selon la revendication 1, **caractérisée en ce que** le premier matériau actif positif satisfait au moins l'une des conditions (1) à (5) :

(1)

$$-0,05 \leq x \leq 0,1 \ ;$$

(2)

$$0,8 \leq y < 1 \ ;$$

(3)

$$0 < z \leq 0,2 \ ;$$

(4) $M_1$ comprend au moins l'un parmi Ni, Mn, Al, Mg, Ti, Zr, La, Y, Fe, Cr, V, Zn ou Rh ; ou
(5) A comprend au moins l'un parmi S ou F.

**3.** La plaque d'électrode positive selon l'une quelconque des revendications 1 à 2, **caractérisée en ce que** le second matériau actif positif satisfait au moins l'une des conditions (6) à (13) :

(6)

$$-0,1 \leq r \leq 0,1 \ ;$$

(7)

$$0,39 \leq p < 0,5 \ ;$$

(8)

$$0,39 \leq q < 0,5 \ ;$$

(9)

$$0 < u \leq 0{,}005 \; ;$$

(10)

$$0 < v \leq 0{,}2 \; ;$$

(11)

$$0 < s \leq 0{,}2 \; ;$$

(12) $M_2$ comprend au moins l'un parmi Mn, Fe, Co, Al, V, Cr, Nb, Mg, Zr ou Zn ; ou

(13) B comprend au moins l'un parmi S ou F.

4. La plaque d'électrode positive selon l'une quelconque des revendications 1 à 3, **caractérisée en ce qu'**un rapport massique entre le premier matériau actif positif et le second matériau actif positif est de 5:1 à 99:1.

5. La plaque d'électrode positive selon l'une quelconque des revendications 1 à 4, **caractérisée en ce que**, sur la base de la masse totale de la couche de film d'électrode positive, un pourcentage massique du premier matériau actif positif est de 80 % à 98 %.

6. La plaque d'électrode positive selon l'une quelconque des revendications 1 à 5, **caractérisée en ce que** la plaque d'électrode positive satisfait : $2 \leq R \times P / Q \leq 36$ ; $\Omega$ R est une résistance unilatérale de la plaque d'électrode positive ; P g/cm$^3$ est une densité apparente de compactage de la plaque d'électrode positive ; et Q g/1540,25 mm$^2$ est une densité surfacique unilatérale de la plaque d'électrode positive.

7. La plaque d'électrode positive selon l'une quelconque des revendications 1 à 6, **caractérisée en ce qu'**une résistance unilatérale de la plaque d'électrode positive est R $\Omega$, satisfaisant : $R \leq 3$.

8. La plaque d'électrode positive selon l'une quelconque des revendications 1 à 7, **caractérisée en ce qu'**une densité apparente de compactage de la plaque d'électrode positive est P g/cm$^3$, et $4{,}0 \leq P \leq 4{,}3$.

9. La plaque d'électrode positive selon l'une quelconque des revendications 1 à 8, **caractérisée en ce qu'**une densité surfacique unilatérale de la plaque d'électrode positive est Q g/1540,25 mm$^2$, et $0{,}16 \leq Q \leq 0{,}38$.

10. La plaque d'électrode positive selon l'une quelconque des revendications 1 à 9, **caractérisée en ce que** le second matériau actif positif appartient à un groupe spatial Immm.

11. La plaque d'électrode positive selon l'une quelconque des revendications 1 à 10, **caractérisée en ce que** dans un motif de diffraction des rayons X du second matériau actif positif déterminé après une première cycle de charge, des pics de diffraction caractéristiques sont présents à des positions correspondant à un angle de diffraction 2θ de 36° à 38°, 42° à 44° et 62° à 64°, respectivement.

12. Un dispositif électrochimique comprenant la plaque d'électrode positive selon l'une quelconque des revendications 1 à 11.

13. Le dispositif électrochimique selon la revendication 12, comprenant en outre une solution d'électrolyte, dans laquelle la solution d'électrolyte comprend un additif de formation de film d'électrode négative ; et sur la base de la masse totale de la solution d'électrolyte, un pourcentage massique de l'additif de formation de film d'électrode négative est de 0 % à 15 %.

14. Le dispositif électrochimique selon la revendication 13, **caractérisé en ce que** l'additif de formation de film d'électrode négative comprend au moins l'un parmi fluorure d'éthylène carbonate, carbonate vinylénique, carbonate vinylène éthylénique, sulfate d'éthylène, sulfate propylénique, sulfoxyde éthylénique, 1,3-propane sultone, 1,3-propène sultone, sel ammonium cyclique quaternaire sulfonate, anhydride succinique, nitrile succinonique, nitrile adipoïque, tris(triméthylsilane)phosphate ou tris(triméthylsilane)borate.

**15.** Un dispositif électronique comprenant le dispositif électrochimique selon l'une quelconque des revendications 12 à 14.

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102569878 A